# EUROPEAN PATENT APPLICATION

(11) **EP 4 187 709 A1**
(43) Date of publication of application: **31.05.2023**
(21) Application number: 22197044.5
(22) Date of filing: 22.09.2022
(51) Int. Cl.: H01M 50/645

(54) **METHOD OF MANUFACTURING POWER STORAGE MODULE AND POWER STORAGE MODULE**

(30) Priority: 30.11.2021 JP 2021194447
(71) Applicant: TOYOTA JIDOSHA KABUSHIKI KAISHA, Aichi-Ken 471-8571 (JP)
(72) Inventor: OKURA, Toshinori, Toyota-shi, 471-8571 (JP); MORI, Hideto, Toyota-shi, 471-8571 (JP); SUZUKI, Shinji, Kariya-shi, 448-8671 (JP)
(74) Representative: D Young & Co LLP

(57) **Abstract**

A method of manufacturing a power storage module (1) includes a preparation process of preparing at least one power storage cell (10) each having a pouring port (16h), a fixing process of attaching and fixing a sealing member (20) to a pouring member (16), a measurement process of measuring the shape of the sealing member (20), a pressure reduction process of reducing the pressure in the power storage cell (10), a re-measuring process of measuring the shape of the sealing member (20) again after the pressure reduction process, and a determination process of calculating the displacement amount of the sealing member (20) based on a measurement result in the measurement process and a measurement result in the re-measuring process, and determining that the internal pressure of the power storage cell (10) is appropriate when the displacement amount is equal to or greater than a reference value.

## Description

### BACKGROUND OF THE INVENTION

### 1. Field of the Invention

The disclosure relates to a method of manufacturing a power storage module and also relates to a power storage module.

### 2. Description of Related Art

For example, a method of determining generation of gas in a case of a secondary battery based on the amount of deformation of the case is disclosed in Japanese Unexamined Patent Application Publication No. 2021-64489 (JP 2021-64489 A).

### SUMMARY OF THE INVENTION

When a secondary battery (cell) is used, gas may be generated inside a case of the cell. Thus, the internal pressure of the cell is required to be guaranteed during manufacturing.

The disclosure provides a method of manufacturing a power storage module and a power storage module, which can guarantee that the internal pressure of each power storage cell is appropriate.

A method of manufacturing a power storage module according to one aspect of the disclosure has a preparation process of preparing at least one power storage cell each including a pouring member having a pouring port through which an electrolyte is poured into the power storage cell, a fixing process of attaching and fixing a sealing member having flexibility and configured to seal the pouring port to the pouring member such that the pouring port is covered with the sealing member, a measurement process of measuring a shape of the sealing member fixed to the pouring member, a pressure reduction process of reducing a pressure in the power storage cell after the measurement process, a sealing process of sealing the power storage cell after the pressure reduction process, a re-measuring process of measuring the shape of the sealing member again after the sealing process, and a determination process of calculating a displacement amount of the sealing member based on a measurement result in the measurement process and a measurement result in the re-measuring process, and determining that an internal pressure of the power storage cell is appropriate when the displacement amount is equal to or greater than a reference value.

A power storage module according to another aspect of the disclosure includes at least one power storage cell each having a pouring port through which an electrolyte is poured into the power storage cell, and a sealing member that has flexibility and seals the pouring port of the at least one power storage cell. Each of the at least one power storage cell includes a pouring member having the pouring port. The pouring member has a receiving surface that surrounds the pouring port and receives the sealing member. The sealing member includes a peripheral contact portion that is in contact with the receiving surface, and an inside portion located inside the peripheral contact portion, and the inside portion is recessed from the peripheral contact portion. The internal pressure of the power storage cell is equal to or lower than the atmospheric pressure.

According to the disclosure, the method of manufacturing the power storage module and the power storage module, which can guarantee that the internal pressure of each power storage cell is appropriate, can be provided.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a perspective view schematically showing power storage cells produced by a method of manufacturing a power storage module according to one embodiment of the disclosure;
FIG. 2 is a plan view of the power storage module shown in FIG. 1;
FIG. 3 is a cross-sectional view taken along line III-III in FIG. 2;
FIG. 4 is a perspective view showing a condition before pouring ports of the power storage modules are closed;
FIG. 5 is a cross-sectional view of a pouring member and a sealing member after a closing process;
FIG. 6 is a perspective view schematically showing a measurement process;
FIG. 7 is a cross-sectional view of the pouring member and the sealing member after a pressure reduction process;
FIG. 8 is a graph indicating the relationship between the degree of pressure reduction of the internal pressure of the power storage cell from the atmospheric pressure and the amount of displacement of the sealing member;
FIG. 9 is a plan view schematically showing a modified example of the pouring member;
FIG. 10 is a plan view schematically showing a modified example of the pouring member; and
FIG. 11 is a plan view schematically showing a modified example of the pouring member.

### DETAILED DESCRIPTION OF EMBODIMENTS

One embodiment of the disclosure will be described with reference to the drawings. In the drawings that will be referred to below, the same reference signs are assigned to the same or corresponding members.

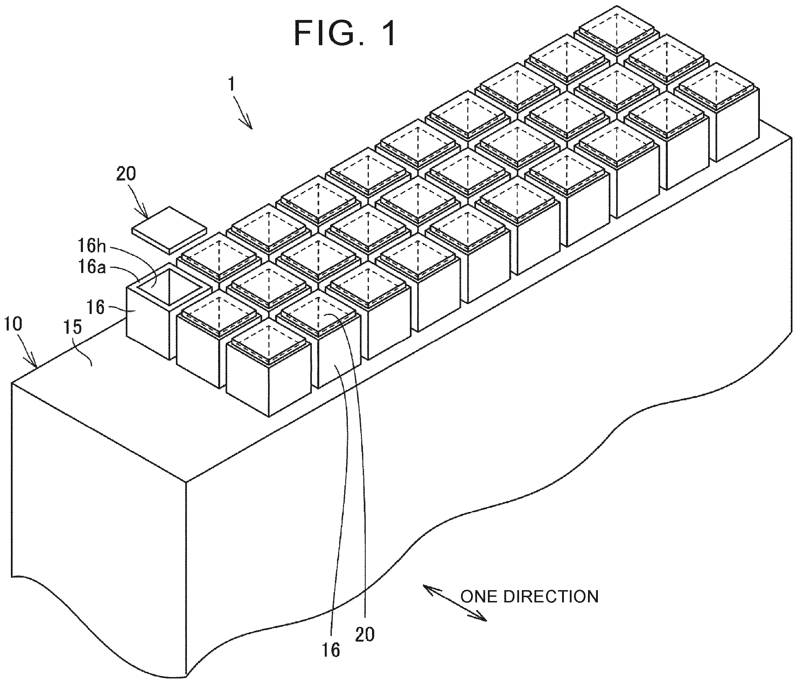

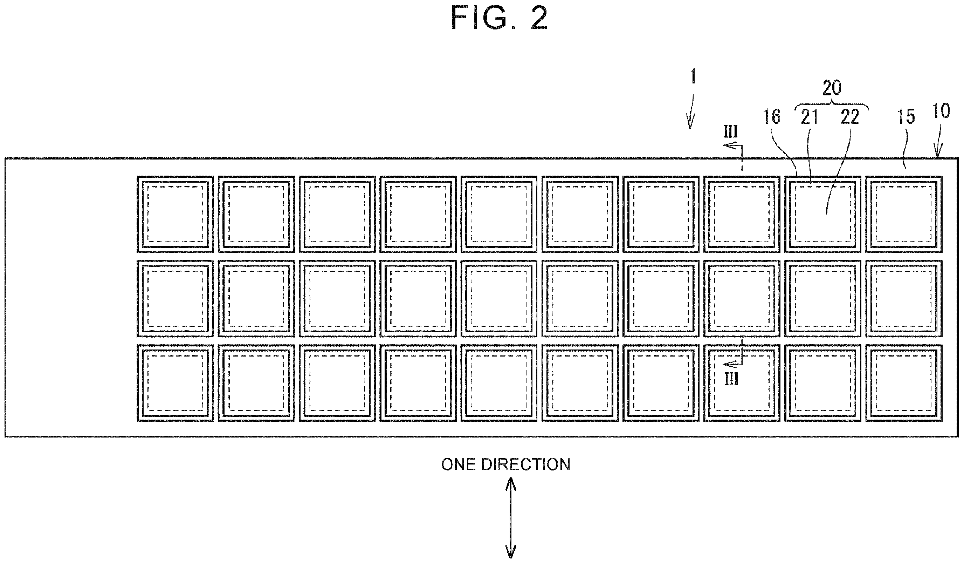

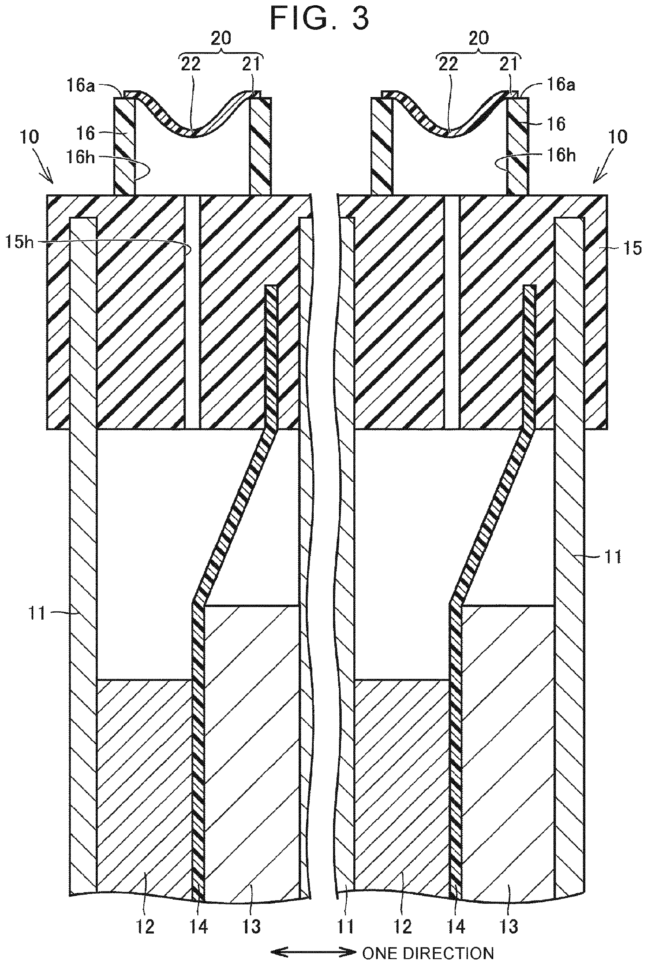

FIG. 1 is a perspective view schematically showing power storage cells produced by a method of manufacturing a power storage module according to one embodiment of the disclosure. FIG. 2 is a plan view of the power storage module shown in FIG. 1. FIG. 3 is a cross-sectional view taken along line III-III in FIG. 2. The power storage module 1 is installed on a vehicle, for example.

As shown in FIG. 1 to FIG. 3, the power storage module 1 of this embodiment includes a plurality of power storage cells 10 and sealing members 20.

The power storage cells 10 are arranged such that they are aligned in one direction (the lateral direction in FIG. 3). In this embodiment, the power storage module 1 includes 30 power storage cells 10 arranged to be aligned in the above-indicated one direction. The internal pressure of each power storage cell 10 is kept at an appropriate value that is equal to or lower than the atmospheric pressure. As shown in FIG. 3, each power storage cell 10 is formed by a bipolar cell. Namely, each power storage cell 10 has current collecting members 11, a positive-electrode active material layer 12, a negative-electrode active material layer 13, a separator 14, a fixing member 15, a pouring member 16, and an electrolyte (not shown). Although not illustrated in FIG. 3, 30 power storage cells 10 are actually aligned in one direction.

The current collecting member 11 is in the form of a flat plate. In the case of a positive electrode, the current collecting member 11 is made of aluminum foil, for example. In the case of a negative electrode, the current collecting member 11 is made of copper foil, for example. However, the current collecting member 11 may be made of nickel foil, stainless steel foil, or clad foil as a combination of aluminum foil and copper foil, for example.

The positive-electrode active material layer 12 is provided on one surface of the current collecting member 11. The negative-electrode active material layer 13 is provided on the other surface of the current collecting member 11.

The separator 14 is provided between the positive-electrode active material layer 12 provided on one current collecting member 11, and the negative-electrode active material layer 13 provided on the current collecting member 11 adjacent to the above-indicated one current collecting member 11.

A positive-electrode tab (not shown) is connected to the current collecting member 11 located at one end portion in the thickness direction of the current collecting member 11 of the power storage cells 10 aligned in one direction. A negative-electrode tab (not shown) is connected to the current collecting member 11 located at the other end portion in the thickness direction of the power storage cells 10 aligned in one direction.

The fixing member 15 fixes edge portions of the respective current collecting members 11 to each other. The fixing member 15 is made of, for example, resin. The fixing member 15 is provided with a communication port 15h that communicates the inside of the power storage cell 10 with the outside thereof.

The pouring member 16 is fixed to the fixing member 15. More specifically, the pouring member 16 is fixed to the fixing member 15 to surround the communication port 15h. The pouring member 16 is made of, for example, resin. As shown in FIG. 1 and FIG. 3, the pouring member 16 has a pouring port 16h for pouring the electrolyte into the power storage cell 10 from the outside of the power storage cell 10. The pouring port 16h communicates with the communication port 15h. In this embodiment, the pouring member 16 is in the form of a tube, more specifically, a square tube defining the pouring port 16h. However, the pouring member 16 is not limited to the square tube, but may be cylindrical, for example. In the schematic view of FIG. 3, one pouring member 16 is attached to a portion of the fixing member 15 surrounding one power storage cell 10, for the sake of easy understanding of the invention. However, the invention is not limited to this arrangement, but one pouring member 16 may be attached to a portion of the fixing member 15 surrounding two or more power storage cells 10 stacked together.

As shown in FIG. 1 and FIG. 3, the pouring member 16 has a receiving surface 16a that receives the sealing member 20. The receiving surface 16a is formed flat.

The sealing member 20 has flexibility, and can seal the pouring port 16h. The sealing member 20 is a sheet-like member made of resin. As shown in FIG. 2 and FIG. 3, the sealing member 20 has a peripheral contact portion 21 having a loop shape and an inside portion 22.

The peripheral contact portion 21 is in contact with the receiving surface 16a of the pouring member 16. The peripheral contact portion 21 is welded to the receiving surface 16a.

The inside portion 22 is located inside the peripheral contact portion 21. As shown FIG. 3, the inside portion 22 is recessed from the peripheral contact portion 21.

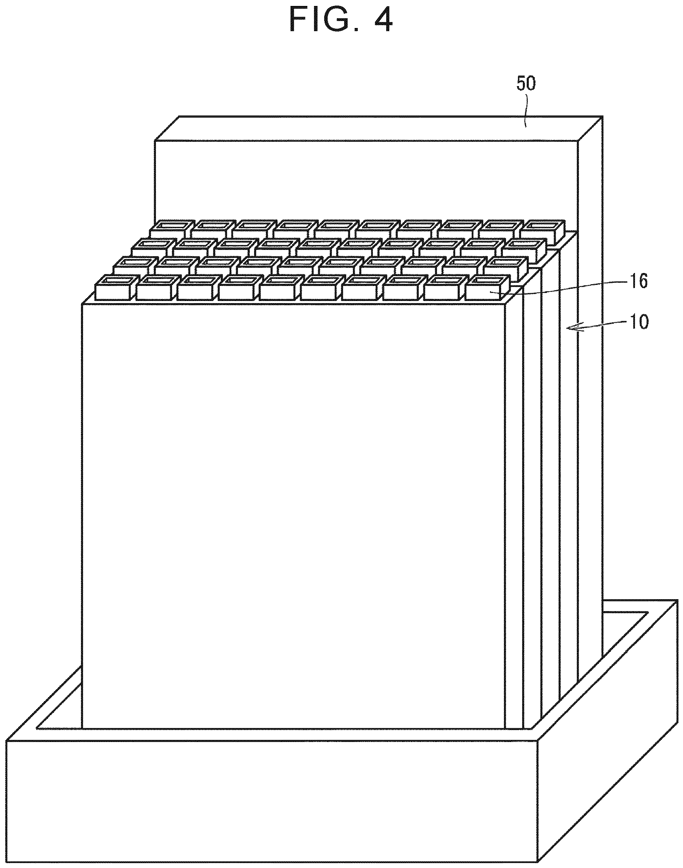

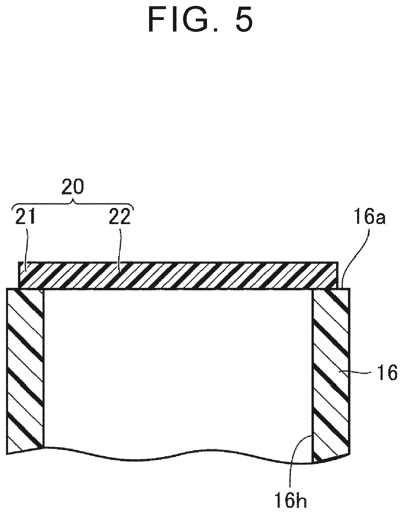

Referring next to FIG. 4 to FIG. 8, the method of manufacturing a power storage module 1 that is different from the embodiment shown in FIG. 1 to FIG. 3 will be described. The manufacturing method includes a preparation process, a fixing process, a measurement process, a pressure reduction process, a sealing process, a re-measuring process, and a determination process.

In the preparation process, the power storage module 1 including four power storage cells 10 is prepared. FIG. 4 shows a condition where four power storage cells 10 are held between a pair of holding plates 50 from both sides in the above-indicated one direction. In FIG. 4, one of the pair of holding plates 50 is not illustrated. The schematic view of FIG. 4 shows a condition where four power storage cells 10 are aligned in one direction, and the number of pouring members 16 in each power storage cell 10 is different from that of FIG. 1. In this condition, the electrolyte is poured into each power storage cell 10 through the corresponding pouring port 16h and communication port 15h.

In the fixing process, the sealing member 20 is fixed to the pouring member 16. Specifically, the sealing member 20 is placed on and fixed to the receiving surface 16a of the pouring member 16. For example, the sealing member 20 is fixed by welding to the receiving surface 16a of the pouring member 16. At this time, a part of the receiving surface 16a and a part of the sealing member 20 are not welded together, but a gap is formed therebetween.

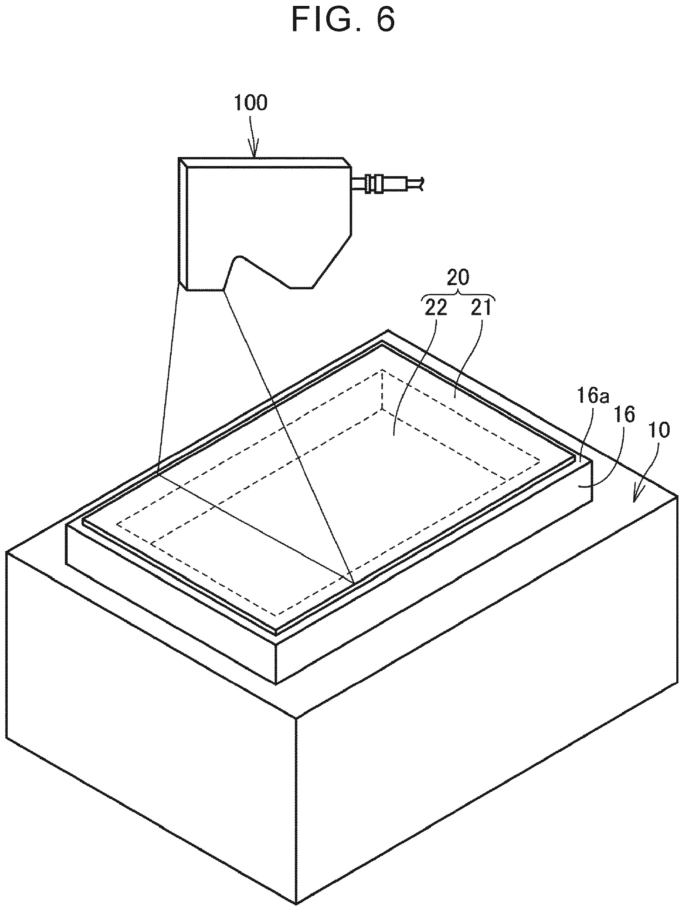

In the measurement process, the shape of the sealing member 20 when attached to the pouring member 16 to cover the pouring port 16h is measured before the pressure in the power storage cell 10 is reduced. As shown in FIG. 6, a measurement device 100 is used in the measurement process, and the three-dimensional shape of the sealing member 20 is measured by the optical cutting method or pattern projection method, for example.

In the pressure reduction process, in the power storage module 1 after the measurement process, the pressure in the power storage cells 10 is reduced. In this process, the power storage module 1 in which the sealing members 20 are fixed to the pouring members 16 is placed in a chamber, and the chamber is subjected to vacuuming so that the pressure in the power storage cells 10 is reduced to be equal to or lower than the atmospheric pressure. At this time, gas in the power storage cell 10 is discharged to the outside of the power storage cell 10 through the gap between the receiving surface 16a of the pouring member 16 and the sealing member 20. In this connection, a gas vent hole or holes may be provided in the sealing member 20 or the pouring member 16, and the gas in the power storage cell 10 may be discharged to the outside of the power storage cell 1 0 through the gas vent hole.

The sealing process is performed after the pressure reduction process or while a vacuum continues to be drawn in the chamber. Specifically, the gap between the peripheral contact portion 21 of the sealing member 20 and the receiving surface 16a of the pouring member 16 is welded, so that the pouring port 16h is closed. In this manner, the power storage cell 10 is sealed in a condition where the pressure in the power storage cell 10 is reduced.

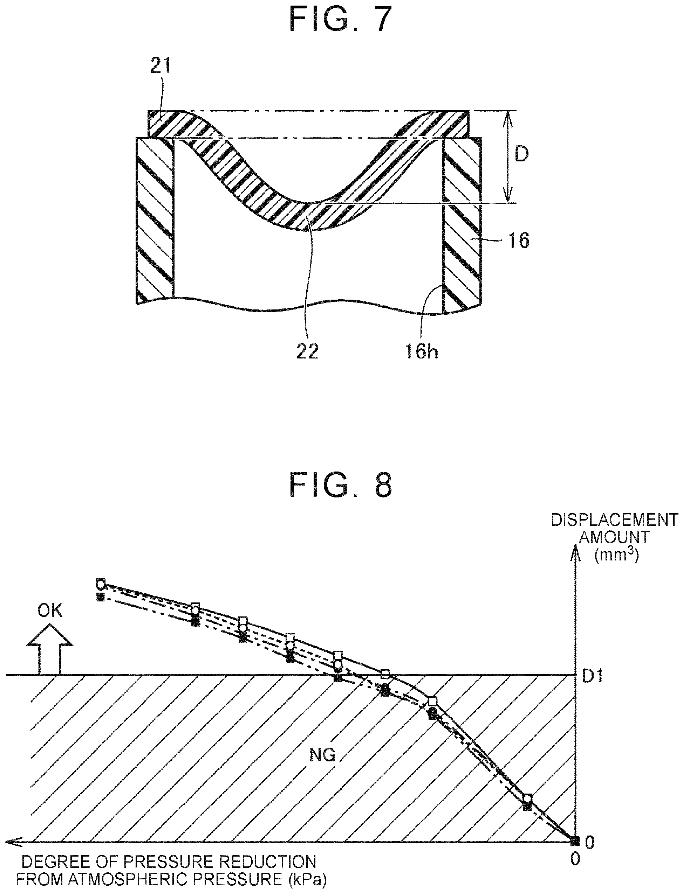

In the re-measuring process, the shape of the sealing member 20 after the pressure reduction process is measured in the power storage module 1 where the power storage cells 10 are sealed in the sealing process. Specifically, the power storage module 1 is taken out of the chamber to be exposed to the atmospheric pressure, for example. At this time, as shown in FIG. 7, the sealing member 20 is deformed such that the inside portion 22 is recessed toward the inside of the power storage cell 10 with respect to the peripheral contact portion 21. Then, as in the measurement process, the three-dimensional shape of the sealing member 20 is measured by the measurement device 100. In FIG. 7, the sealing member 20 before deformed is indicated by two-dot chain lines.

In the determination process, the displacement amount D (see FIG. 7) of the sealing member 20 is calculated based on the measurement result in the measurement process and the measurement result in the re-measuring process, and the internal pressure P of the power storage cell 10 is determined to be appropriate when the displacement amount D is equal to or greater than a reference value D1. Preferably, the displacement amount D is the displacement of a central portion of the inside portion 22 before and after the pressure reduction process, for example.

FIG. 8 is a graph indicating the relationship between the displacement amount D of the sealing member 20 and the degree of pressure reduction of the internal pressure P of the power storage cell 10 from the atmospheric pressure. As shown in FIG. 8, the displacement amount D increases as the degree of pressure reduction of the power storage cell 10 increases. It has been confirmed, via simulation and preliminary experiments, that when the displacement amount D is equal to or greater than D1, the internal pressure P of the power storage cell 10 is equal to or less than the appropriate value P1 that is equal to or lower than the atmospheric pressure. Thus, in the determination process, the internal pressure P of the power storage cell 10 is determined to be appropriate when the displacement amount D is equal to or greater than the reference value D1. In FIG. 8, the range in which the internal pressure of the power storage cell 10 is greater than the appropriate value P1 is represented by a hatched area.

As described above, in the determination process of the method of manufacturing the power storage module 1, the displacement amount D of the sealing member 20 is calculated based on the shape of the sealing member 20 before and after the pressure reduction process, and the internal pressure P of the power storage cell 10 is determined to be appropriate when the displacement amount D is equal to or greater than the reference value D1. Thus, the power storage module 1 in which the internal pressure P of each power storage cell 10 is appropriate is manufactured.

While the bipolar power storage module is illustrated by way of example as the power storage module 1 in the above embodiment, the power storage module 1 is not limited to this type. In this connection, the bipolar module is constructed such that two or more structures each having the positive-electrode active material layer 12 on one surface of a certain current collecting member 11 and the negative-electrode active material layer 13 on the other surface are stacked with the separator 14 sandwiched between the positive-electrode active material layer 12 and the negative-electrode active material layer 13.

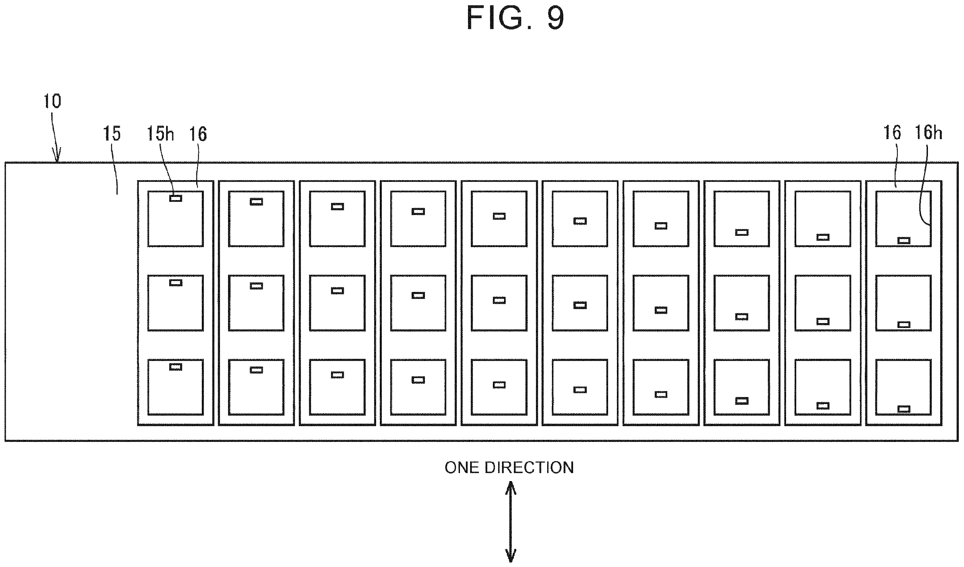

As shown in FIG. 9, three pouring members 16 aligned in the above-indicated one direction (the stacking direction of the current collecting members 11, positive-electrode active material layers 12, and negative-electrode active material layers 13) may be connected to each other. In this case, the respective pouring ports 16h of the three pouring members 16 connected to each other may be collectively closed by a single sealing member 20.

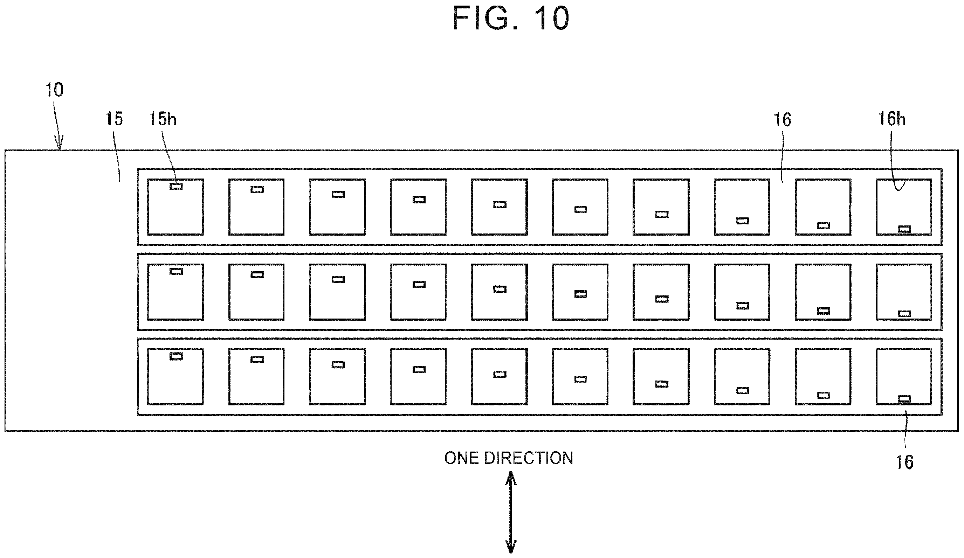

Alternatively, as shown in FIG. 10, 10 pouring members 16 aligned in the direction perpendicular to the above-indicated one direction may be connected to each other.

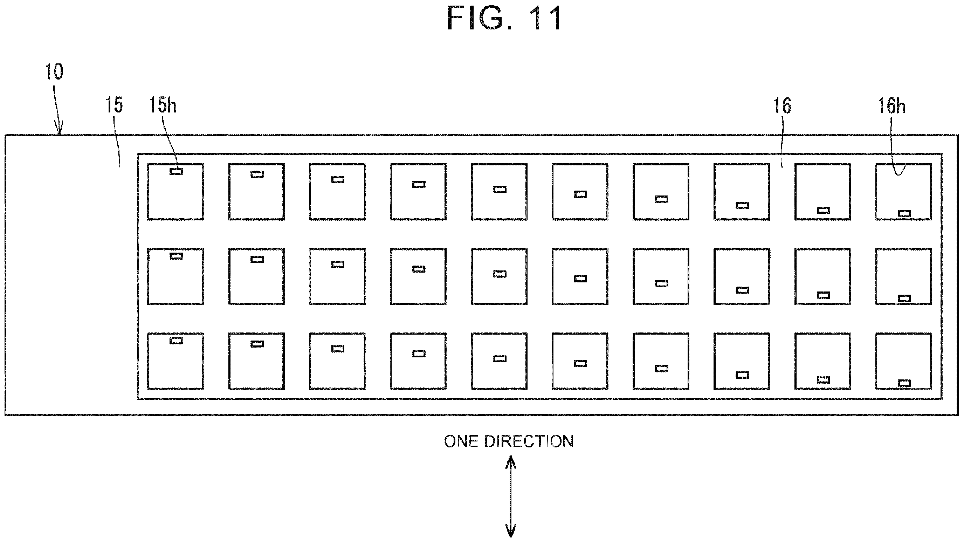

Alternatively, as shown in FIG. 11, all of the pouring members 16 may be connected to each other.

It is understood by those skilled in the art that the exemplary embodiments as described above are specific examples of the following aspects.

The method of manufacturing the power storage module according to the above embodiment includes a preparation process of preparing at least one power storage cell each including a pouring member having a pouring port through which an electrolyte is poured into the power storage cell, a fixing process of attaching and fixing a sealing member having flexibility and configured to seal the pouring port to the pouring member such that the pouring port is covered with the sealing member, a measurement process of measuring the shape of the sealing member fixed to the pouring member, a pressure reduction process of reducing the pressure in the power storage cell after the measurement process, a sealing process of sealing the power storage cell after the pressure reduction process, a re-measuring process of measuring the shape of the sealing member again after the sealing process, and a determination process of calculating a displacement amount of the sealing member based on a measurement result in the measurement process and a measurement result in the re-measuring process, and determining that the internal pressure of the power storage cell is appropriate when the displacement amount is equal to or greater than a reference value.

According to the method of manufacturing the power storage module, in the determination process, the displacement amount of the sealing member is calculated based on the shape of the sealing member before and after the pressure reduction process, and the internal pressure of the power storage cell is determined to be appropriate when the displacement amount is equal to or greater than the reference value. It is thus possible to manufacture the power storage module in which the internal pressure of each power storage cell is appropriate.

In the fixing process, the sealing member may be fixed to the pouring member such that a gap is formed between the pouring member and the sealing member. In the pressure reduction process, the pressure in the power storage cell may be reduced by discharging gas in the power storage cell through the gap. In the sealing process, the power storage cell may be sealed by welding the sealing member to the pouring member to close the gap.

In this mode, the pouring port is also used for pressure reduction; therefore, the structure is simplified compared to the case where an opening is provided in the power storage cell exclusively for pressure reduction.

The above-indicated at least one power storage cell prepared in the preparation process may include a plurality of power storage cells, and two or more pouring members, among the respective pouring members of the power storage cells, may be connected to each other. In this case, in the fixing process, the pouring ports of the two or more pouring members connected to each other may be collectively covered with the sealing member alone.

In the above mode, the number of the sealing members is reduced as compared with the case where the sealing member corresponding to each pouring port is prepared; therefore, the management and handling of the sealing members are simplified. Also, adjacent pouring members have common frame portions at their boundaries, and the number of welding points of the sealing members to the pouring members is reduced, thus making the production easier.

In the preparation process, a bipolar power storage cell may be prepared as the power storage cell.

In the power storage module including bipolar cells as the power storage cells, it is difficult to determine the internal pressure of the power storage cell based on its external appearance, with respect to the power storage cells other than those located outermost in the above-indicated one direction among the plurality of power storage cells. Thus, the above effect is particularly pronounced.

A power storage module according to another aspect of the disclosure includes at least one power storage cell each having a pouring port through which an electrolyte is poured into the power storage cell, and a sealing member that has flexibility and seals the pouring port of the at least one power storage cell. Each of the at least one power storage cell includes a pouring member having the pouring port. The pouring member has a receiving surface that surrounds the pouring port and receives the sealing member. The sealing member includes a peripheral contact portion that is in contact with the receiving surface, and an inside portion located inside the peripheral contact portion, and the inside portion is recessed from the peripheral contact portion. The internal pressure of the power storage cell is equal to or lower than an atmospheric pressure.

It is to be understood that the embodiments disclosed herein are exemplary in all respects, and are not restrictive. The scope of the invention is indicated by the claims rather the above description of the embodiments, and includes all changes within the claims and the meaning and range of equivalents thereof.

## Claims

1. A method of manufacturing a power storage module (1), the method comprising:
a preparation process of preparing at least one power storage cell (10) each including a pouring member (16) having a pouring port (16h) through which an electrolyte is poured into the power storage cell;
a fixing process of attaching and fixing a sealing member (20) having flexibility and configured to seal the pouring port to the pouring member (16) such that the pouring port is covered with the sealing member;
a measurement process of measuring a shape of the sealing member (20) fixed to the pouring member (16);
a pressure reduction process of reducing a pressure in the power storage cell (10) after the measurement process;
a sealing process of sealing the power storage cell (10) after the pressure reduction process;
a re-measuring process of measuring the shape of the sealing member (20) again after the sealing process; and
a determination process of calculating a displacement amount of the sealing member (20) based on a measurement result in the measurement process and a measurement result in the re-measuring process, and determining that an internal pressure of the power storage cell (10) is appropriate when the displacement amount is equal to or greater than a reference value.

2. The method according to claim 1, wherein:
in the fixing process, the sealing member (20) is fixed to the pouring member (16) such that a gap is formed between the pouring member and the sealing member;
in the pressure reduction process, the pressure in the power storage cell (10) is reduced by discharging gas in the power storage cell through the gap; and
in the sealing process, the power storage cell (10) is sealed by welding the sealing member (20) to the pouring member (16) to close the gap.

3. The method according to claim 1 or 2, wherein:
the at least one power storage cell (10) prepared in the preparation process comprises a plurality of power storage cells, and two or more pouring members, among the respective pouring members (16) of the power storage cells, are connected to each other; and
in the fixing process, the pouring ports (16h) of the two or more pouring members connected to each other are collectively covered with the sealing member (20) alone.

4. The method according to any one of claims 1 to 3, wherein a bipolar power storage cell is prepared as the power storage cell (10) in the preparation process.

5. The method according to any one of claims 1 to 4, wherein the displacement amount is an amount by which a central portion of the sealing member (20) is displaced toward an inside of the power storage cell.

6. The method according to any one of claims 1 to 5, wherein, in the measurement process and the re-measuring process, a three-dimensional shape of the sealing member (20) is measured by a measurement device (100).

7. A power storage module (1), comprising:
at least one power storage cell (10) each having a pouring port (16h) through which an electrolyte is poured into the power storage cell; and
a sealing member (20) that has flexibility and seals the pouring port of the at least one power storage cell,
wherein each of the at least one power storage cell includes a pouring member (16) having the pouring port,
wherein the pouring member (16) has a receiving surface (16a) that surrounds the pouring port and receives the sealing member,
wherein the sealing member (20) includes a peripheral contact portion (21) that is in contact with the receiving surface, and an inside portion (22) located inside the peripheral contact portion, the inside portion being recessed from the peripheral contact portion; and
wherein an internal pressure of the power storage cell (10) is equal to or lower than an atmospheric pressure.
